# EUROPÄISCHE PATENTANMELDUNG

(11) **EP 4 276 600 A1**
(43) Veröffentlichungstag der Anmeldung: **15.11.2023**
(21) Anmeldenummer: 23172265.3
(22) Anmeldetag: 09.05.2023
(51) Int. Cl.: G06F 8/33, G06F 8/34, G06F 8/41

(54) **VERFAHREN ZUR ERZEUGUNG VON QUELLCODE**

(30) Priorität: 12.05.2022 DE 102022111911
(71) Anmelder: dSPACE GmbH, 33102 Paderborn (DE)
(72) Erfinder: Mair, Michael, 33102 Paderborn (DE)

(57) **Zusammenfassung**

Die Erfindung betrifft ein Verfahren zum Erzeugen von Quellcode aus einem oder mehreren Blöcken eines Blockdiagramms, wobei empfangene Änderungen an Modellelementen des Blockdiagramms gespeichert werden. Das Erzeugen von Quellcode umfasst ein Transformieren des Blockdiagramms in eine Zwischendarstellung, ein sukzessives Optimieren der Zwischendarstellung und ein Übersetzen der optimierten Zwischendarstellung in Quellcode. Hierbei wird für geänderte Modellelemente mindestens eine Plausibilitätsregel überprüft. Wenn die Plausibilitätsregel nicht erfüllt ist, wird eine Warnung ausgegeben. Ein Nutzer kann die Änderung gutzeichnen, um das wiederholte Anzeigen von Warnungen zu vermeiden. Weiterhin betrifft die Erfindung ein Verfahren zum Konfigurieren eines Steuergeräts, ein Computerprogrammprodukt und ein Computersystem.

## Beschreibung

Die Erfindung betrifft die Erzeugung von ausführbarem Code aus einem Blockdiagramm, insbesondere für die Programmierung von Steuergeräten.

Steuergeräte werden in einer Vielzahl von Anwendungen eingesetzt, um physikalische Größen eines Prozesses zu erfassen und/oder mittels angeschlossener Aktuatoren auf einen Prozess einzuwirken; beispielsweise kann es sich um eine Antiblockierregelung eines Bremsvorgangs handeln. Die das dynamische Verhalten des Prozesses bestimmenden Zeitkonstanten bedingen häufig Zykluszeiten von 1 ms oder kürzer, so dass in der Regel eine Echtzeitfähigkeit des Steuergeräts erforderlich ist, insbesondere wenn innerhalb einer vorgegebenen maximalen Latenz auf geänderte Sensorwerte reagiert werden muss. Aus Kostengründen weisen Steuergeräte häufig Mikrocontroller mit geringem Speicher und beschränkter Rechenleistung auf, weshalb der Größe und Effizienz des ausführbaren Codes eine große Bedeutung zukommt.

Um den Entwurf von Steuergeräten zu beschleunigen, werden Kontrollstrategien häufig anhand von Modellen in einer Rechenumgebung wie MATLAB/Simulink entwickelt. Somit können Prozess und/oder Regler bzw. allgemein das Verhalten des Steuergeräts zunächst simuliert und das Vorliegen von gewünschten Eigenschaften überprüft werden. Bei den Modellen kann es sich insbesondere um Blockdiagramme handeln, welche Blöcke umfassen, die Operationen wie Berechnungen ausführen, wobei ein Block beispielsweise aus mehreren Eingangssignalen ein Ausgangssignal berechnen kann. In der Regel werden Blockdiagramme zyklisch ausgeführt, wobei alle Blöcke dauerhaft im Speicher gehalten werden und jeder Block einmal pro Zeitschritt ausgeführt wird. Insbesondere kann ein Block auf Eingangssignale aus dem letzten Schritt eine oder mehrere Operationen anwenden, um Ausgangssignale des aktuellen Schritts zu erzeugen. Aus den Modellen kann mittels eines Codegenerators direkt Quellcode für die Programmierung des Steuergeräts erzeugt werden. Beispielsweise ist aus dem Dokument "Production Quality Code Generation from Simulink Block Diagrams", Proceedings of the 1999 International Symposium on Computer Aided Control System Design, Kohala Coast, Hawai'i, von H. Hanselmann et al. ein Codegenerator für die Erzeugung von Quellcode in Produktionsqualität bekannt.

Bei der Modellierung können die Modellelemente eines Blockdiagramms mit weiteren Parametern bzw. Codegenerierungseinstellungen versehen werden, um den erzeugten Quellcode anzupassen. So können für eine Blockvariable neben einem Datentyp auch weitere Eigenschaften wie beispielsweise ein Wertebereich bzw. eine Skalierung angegeben werden. Auch die Optimierung des Codegenerators kann beeinflusst werden, beispielsweise indem mittels eines Tags angegeben wird, ob eine Variable mit anderen Variablen zusammengefasst werden kann. Blockdiagramme sind in der Regel hierarchisch, wobei eine Vielzahl von untergeordneten Blöcken die Funktionalität eines übergeordneten hierarchischen Blocks implementieren. Vorzugsweise können hierarchische Blöcke auch verschachtelt werden, und ermöglichen somit eine Strukturierung des Blockdiagramms. Aus einem hierarchischen Block kann insbesondere eine Funktion im Quellcode erzeugt werden. An dem hierarchischen Block oder einem untergeordneten Block können Eigenschaften der Funktion angegeben werden, beispielsweise ob diese verschoben werden kann bzw. keine Seiteneffekte in anderen Teilen des Blockdiagramms auslöst. Seiteneffekte können beispielsweise dadurch entstehen, dass ein Block in eine Speichervariable schreibt, und ein anderer Block aus dieser Speichervariablen liest.

Aufgrund der Komplexität moderner Regelalgorithmen können Blockdiagramme einige Tausend Blöcke enthalten, wobei sich einzelne Teilfunktionalitäten auch in verschiedenen Teilen des Blockdiagramms wiederholen können. Daher bietet es sich an, einen einmal erstellten hierarchischen Block von einer Stelle des Blockdiagramms zu einer anderen zu kopieren. Dies kann allerdings dazu führen, dass ein oder mehrere Codegenerierungseinstellungen bzw. deren Werte für den kopierten Block nicht mehr gelten. Wird jetzt eine Codegenerierung durchgeführt, kann dies im Extremfall zu falschem Code führen.

Vor diesem Hintergrund ist es eine Aufgabe der vorliegenden Erfindung, den Stand der Technik weiterzuentwickeln und insbesondere den Anwender bei mutmaßlich fehlerhaft parametrierten Blöcken zu warnen, bevor diese die Codegenerierung beeinflussen können.

Diese Aufgabe wird durch ein Verfahren zum Erzeugen von Quellcode nach Anspruch 1, ein Computerprogrammprodukt nach Anspruch 14 und ein Computersystem nach Anspruch 15 gelöst. Vorteilhafte Weiterbildungen sind Gegenstand der abhängigen Unteransprüche.

Es wird also ein computerimplementiertes Verfahren zum Erzeugen von Quellcode aus einem oder mehreren Blöcken eines Blockdiagramms bereitgestellt, wobei das Erzeugen von Quellcode ein Auswerten mindestens einer Codegenerierungseinstellung, ein Transformieren des Blockdiagramms in eine Zwischendarstellung, ein sukzessives Optimieren der Zwischendarstellung unter Berücksichtigung der mindestens einen Codegenerierungseinstellung und ein Übersetzen der optimierten Zwischendarstellung in Quellcode umfasst. Das Verfahren umfasst die Schritte
Öffnen des Blockdiagramms in einem Modelleditor,
Empfangen einer Änderung an einem Modellelement, wobei das Modellelement mit mindestens einer Codegenerierungseinstellung parametriert ist,
Speichern der Änderung in einer Datenbank,
Erzeugen von Quellcode,
Überprüfen, ob das geänderte Modellelement eine Plausibilitätsregel erfüllt, und
Wenn die Plausibilitätsregel nicht erfüllt ist, Ausgeben einer Warnung und/oder Markieren des Quellcodes als ungültig.

Bei den Modellelementen kann es sich insbesondere um Blöcke handeln, die häufig mindestens eine Blockvariable umfassen. Blockvariablen können explizit im Block definiert sein oder automatisch erzeugt werden, beispielsweise anhand einer Signalverbindung, wo zu einem Ausgangssignal eines Blocks zweckmäßigerweise eine Blockvariable, also eine Blockausgangsvariable, erzeugt wird. Manche Blöcke, wie beispielsweise ein Delay-Block, weisen auch Zustandsvariablen auf.

Dadurch, dass erfindungsgemäß überprüft wird, ob das geänderte Modellelement eine Plausibilitätsregel erfüllt, kann ein Benutzer auf potentiell problematische Modellierungen hingewiesen werden und diese gezielt überprüfen. Insbesondere das Hinzufügen einer Zustandsvariablen oder das Öffnen eines Datenflusses aus einem hierarchischen Block sind potentiell problematisch. Ersichtlich unproblematische Änderungen werden ohne weiteres akzeptiert - durch die Berücksichtigung der Modellsemantik wird die Anzahl zu überprüfender Änderungen deutlich verringert.

Bevorzugt kann zu einer Änderung ein Gutzeichnen in der Datenbank hinterlegt werden, wobei die Plausibilitätsregel erfüllt ist, wenn die Änderung gutgezeichnet wurde. Somit erfolgt für gutgezeichnete Änderungen keine Warnung und/oder kein Markieren des Quellcodes als ungültig. Sobald der Nutzer eine Änderung überprüft hat, erfolgt bis zu einer erneuten Änderung zweckmäßigerweise keine Warnung mehr.

Besonders bevorzugt erfolgt das Anzeigen einer Bedienoberfläche, um ein Gutzeichnen einer Änderung zu empfangen, wobei vorzugsweise ein Ausschnitt des erzeugten Quellcodes dargestellt wird, der insbesondere aus dem geänderten Modellelement erzeugten Quellcode umfasst. Indem der Quellcode für die Umgebung des geänderten Modellelements dargestellt wird, kann der Nutzer einfach eventuelle Auswirkungen auf den Code erkennen.

In einer Ausführungsform umfasst die Änderung ein Kopieren eines Modellelements und/oder aller Codegenerierungseinstellungen eines Modellelements. Durch das Kopieren des Modellelements mit allen Codegenerierungseinstellungen oder ein einfaches Übernehmen sämtlicher Codegenerierungseinstellungen eines anderen Modellelements können diese potentiell Zusicherungen umfassen, die für das geänderte Modellelement nicht mehr gelten. Daher ist es vorteilhaft, diese Änderungen mittels einer Plausibilitätsregel zu überprüfen.

Gemäß einer bevorzugten Ausführungsform ist die Plausibilitätsregel erfüllt, wenn für ein Modellelement, das mindestens eine Variable aufweist, der Wertebereich der mindestens einen Variable größer oder gleich dem Wertebereich einer Eingangsvariable nach Anwendung der im geänderten Modellelement vorgenommenen Berechnung ist und/oder mindestens eine Codegenerierungseinstellung im geänderten Modellelement einen abweichenden Wert gegenüber dem ursprünglichen Modellelement hat. Ein Modellelement, welches eine Berechnung durchführt, transformiert auch die Wertebereiche in bekannter Weise; dadurch wird es möglich, Fehlspezifikationen wie einen offensichtlich zu kleinen Ausgangswertebereich anhand des oder der Eingangswertebereiche zu erkennen. Eine Überprüfung der Wertebereiche kann bevorzugt nach einer Erzeugung einer Zwischendarstellung erfolgen. Im Falle eines Kopierens von Modellelementen bzw. aller Codegenerierungseinstellungen ist die Überprüfung, ob mindestens eine Codegenerierungseinstellung geändert wurde, als Plausibilitätsregel zweckmäßig, weil dadurch sichergestellt wird, dass der Nutzer die Codegenerierungseinstellungen zumindest einmal editiert hat.

In einer Ausführungsform ist das Modellelement ein hierarchischer Block, dessen Funktionalität durch ein oder mehrere untergeordnete Blöcke implementiert ist. Da hierarchische Blöcke häufig als eigenständige Funktionen implementiert werden, können ihre Codegenerierungseinstellungen häufig potentiell problematische Zusicherungen umfassen. Um Fehlspezifikationen zu vermeiden, erfolgt zweckmäßigerweise die Überprüfung mindestens einer Plausibilitätsregel für hierarchische Blöcke.

Wenn die Änderung ein Hinzufügen eines untergeordneten Blocks ist, ist gemäß einer bevorzugten Ausführungsform die Plausibilitätsregel nicht erfüllt, wenn der hinzugefügte Block eine Zustandsvariable und/oder eine Datenverbindung zu einem Modellelement außerhalb des hierarchischen Blocks umfasst. Eine Datenverbindung kann beispielsweise durch den Zugriff auf eine Speichervariable hervorgerufen werden, auf die potentiell auch außerhalb des hierarchischen Blocks zugegriffen werden kann. Besonders problematisch ist hierbei, dass dies anders als bei einer Signalverbindung nicht ohne weiteres erkennbar ist.

Gemäß einer bevorzugten Ausführungsform ist dann, wenn der hierarchische Block eine Codegenerierungseinstellung aufweist, welche eine Verschiebbarkeit und/oder eine Freiheit von Seiteneffekten angibt, die Plausibilitätsregel nicht erfüllt, wenn ein untergeordneter Block des hierarchischen Blocks eine Variable umfasst, für welche die Codegenerierungseinstellungen zu einem möglichen Zusammenfassen von Variablen und/oder eine Speicheradresse einer Variablen geändert wurden. Insbesondere das Zulassen eines Zusammenfassens von Variablen während der Optimierung kann unerwünschte Seiteneffekte hervorrufen. Wenn dies für untergeordnete Blöcke eines hierarchischen Blocks zugelassen wurde, sind Zusicherungen hinsichtlich der Freiheit von Seiteneffekten riskant und sollten vermieden werden. Auch durch eine geänderte Speicheradresse kann sich der Datenfluss ändern.

Bevorzugt wird mit einem Änderungsbefehl des Modelleditors eine Funktion in einer Skriptumgebung verknüpft, welche zumindest das geänderte Modellelement, eine ursprüngliche Codegenerierungseinstellung und eine geänderte Codegenerierungseinstellung in der Datenbank hinterlegt. Dies ermöglicht eine für den Nutzer transparente Speicherung der von der Änderung betroffenen Daten. Anhand der hinterlegten Daten kann der Nutzer später die Änderungen überprüfen und bei Bedarf auch rückgängig machen.

Besonders bevorzugt werden, sofern der Änderungsbefehl ein Kopieren des Modellelements ist, das geänderte Modellelement mit sämtlichen Codegenerierungseinstellungen, das ursprüngliche Modellelement und sämtliche Codegenerierungseinstellungen des ursprünglichen Modellelements in der Datenbank hinterlegt. Auch wenn das ursprüngliche Modellelement später geändert wird, kann die Ausgangslage sicher erkannt werden.

Vorzugsweise wird das Überprüfen, ob das geänderte Modellelement mindestens eine Plausibilitätsregel erfüllt, durch ein Empfangen eines Befehls zum Erzeugen von Quellcode ausgelöst, wobei der Befehl über eine grafische Benutzeroberfläche und/oder eine Anwendungsschnittstelle empfangen werden kann. Es ist vorteilhaft, wenn der Nutzer zunächst frei und ohne Verzögerung editieren kann. Sobald der Befehl zum Erzeugen von Quellcode gegeben wird, kann von einem aus Sicht des Nutzers fertigen Stand ausgegangen werden, für den eine Überprüfung der Plausibilität sinnvoll ist.

Wenn das Blockdiagramm eine Vielzahl von Modellelementen umfasst, ist es vorteilhaft, dass für jedes geänderte Modellelement und/oder jede gespeicherte Änderung mindestens eine Plausibilitätsregel überprüft wird. Auch nach einer längeren Bearbeitung ermöglichen die hinterlegten Informationen eine Überprüfung der Plausibilität.

In Ausführungsformen der Erfindung kann es vorgesehen sein, dass potentiell problematische Codegenerierungseinstellungen getrennt von anderen Einstellungen und/oder Modellelementen hinterlegt sind. Diese Codegenerierungseinstellungen können dann zu einem späteren Zeitpunkt auf Plausibilität überprüft werden, beispielsweise anhand eines Zählers von Modellversionen. Dadurch wird besonders bei großen Modellen der Überprüfungsaufwand verringert und auch weitergehende Tests, wie eine Plausibilitätsprüfung nach jeder größeren Änderung der Modellversion ermöglicht.

Die Erfindung betrifft ferner ein Verfahren zum Konfigurieren eines Steuergeräts, wobei das Steuergerät mindestens eine Recheneinheit umfasst und vorzugsweise mindestens einen Sensor und/oder mindestens einen Aktor aufweist, um Daten eines physikalischen Prozesses zu erfassen und/oder auf diesen einzuwirken, das Verfahren umfassend die Schritte
a. Einlesen eines Blockdiagramms,
b. Erzeugen eines Quellcodes mit einem erfindungsgemäßen Verfahren,
c. Kompilieren des Quellcodes für die Recheneinheit, so dass ein ausführbarer Code erzeugt wird,
d. Übertragen des ausführbaren Codes auf das Steuergerät, und
e. Hinterlegen des ausführbaren Codes auf einem nichtflüchtigen Speicher des Steuergeräts und/oder Ausführen des ausführbaren Codes durch die Recheneinheit des Steuergeräts.

Ferner betrifft die Erfindung ein Computerprogrammprodukt mit einem computerlesbaren Speichermedium, auf dem Befehle eingebettet sind, die, wenn sie von einem Prozessor ausgeführt werden, bewirken, dass der Prozessor dazu eingerichtet ist, ein erfindungsgemäßes Verfahren auszuführen.

Weiterhin betrifft die Erfindung ein Computersystem umfassend eine Mensch-Maschine-Schnittstelle, einen nichtflüchtigen Speicher und einen Prozessor, wobei der Prozessor dazu eingerichtet ist, ein erfindungsgemäßes Verfahren auszuführen.

Die Erfindung wird nachfolgend unter Bezugnahme auf die Zeichnungen näher erläutert. Hierbei werden gleichartige Teile mit identischen Bezeichnungen beschriftet. Die dargestellten Ausführungsformen sind stark schematisiert, d.h. die Abstände und die lateralen und die vertikalen Abmessungen sind nicht maßstäblich und weisen, sofern nicht anders angegeben, auch keine ableitbaren geometrischen Relationen zueinander auf.

Darin zeigt:
- Figur 1: eine beispielhafte Ausführung eines Computersystems,
- Figur 2: eine schematische Darstellung der vorzugsweise auf einem Computersystem vorhandenen Softwarekomponenten,
- Figur 3: einen schematischen Ablaufplan einer Ausführungsform des erfindungsgemäßen Verfahrens zum Erzeugen von Quellcode, und
- Figur 4: ein Beispiel eines hierarchischen Blockdiagramms.

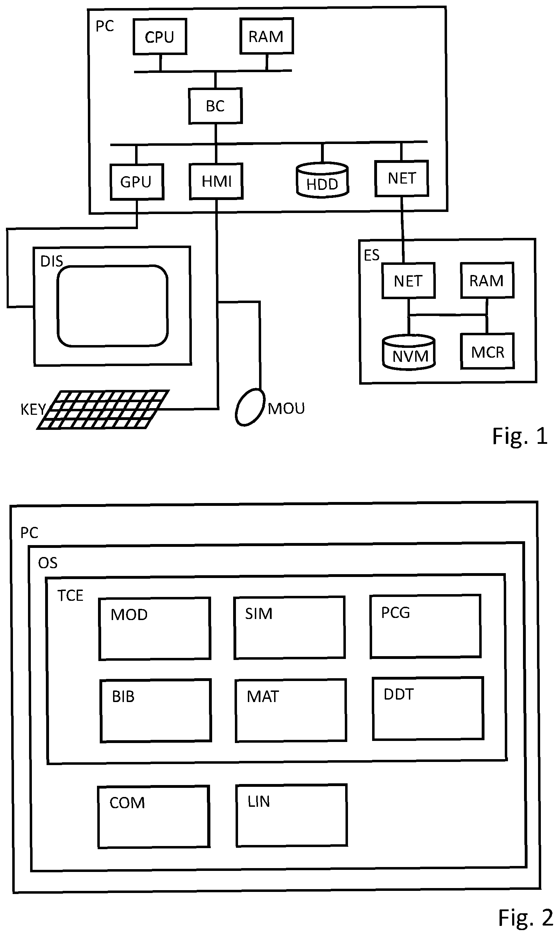

Figur 1 zeigt eine bevorzugte Ausführungsform eines Computersystems PC. Dieses weist einen Prozessor CPU, der insbesondere als Mehrkernprozessor realisiert sein kann, einen Arbeitsspeicher RAM und einen Buscontroller BC auf. Bevorzugt ist das Computersystem PC dazu ausgelegt, von einem Nutzer direkt manuell bedient zu werden, wobei über eine Grafikkarte GPU ein Monitor DIS und über eine Peripherieschnittstelle HMI eine Tastatur KEY und eine Maus MOU angeschlossen sind. Prinzipiell könnte die Mensch-Maschine-Schnittstelle des Computersystems PC auch als Touch-Interface ausgebildet sein. Das Computersystem umfasst weiterhin einen nichtflüchtigen Datenspeicher HDD, der insbesondere als Festplatte und/oder Solid State Disk ausgeführt sein kann, sowie eine Schnittstelle NET, insbesondere eine Netzwerkschnittstelle. Über die Schnittstelle NET kann ein Steuergerät ES angeschlossen sein. Prinzipiell können ein oder mehrere beliebige Schnittstellen, insbesondere drahtgebundene Schnittstellen, an dem Computersystem PC vorhanden und jeweils für die Verbindung mit einem Steuergerät ES einsetzbar sein. Zweckmäßigerweise kann eine Netzwerkschnittstelle nach dem Ethernet-Standard verwendet werden; die Schnittstelle NET kann auch drahtlos ausgeführt sein, wie insbesondere als WLAN-Schnittstelle oder nach einem Standard wie Bluetooth.

Das Steuergerät ES kann als ein Seriensteuergerät oder als Evaluierungsboard für eine Target-Plattform ausgeführt sein. Zweckmäßigerweise umfasst es eine Schnittstelle NET zur Verbindung mit dem Computersystem PC, einen Mikrocontroller MCR mit einer von dem Prozessor des Computersystems abweichenden Architektur, einen Arbeitsspeicher RAM und einen nichtflüchtigen Speicher NVM. Das Vorhandensein eines Steuergeräts ist für das erfindungsgemäße Verfahren nicht erforderlich, es ermöglicht jedoch einen Processor-in-the-Loop Test des generierten Codes.

In Figur 2 ist ein Schema der vorzugsweise auf dem Computersystem PC installierten Softwarekomponenten dargestellt. Diese verwenden Mechanismen des Betriebssystems OS, um beispielsweise auf den nichtflüchtigen Speicher HDD zuzugreifen oder über die Netzwerkschnittstelle NET eine Verbindung zu einem externen Rechner aufzubauen.

Eine Technische Rechenumgebung TCE ermöglicht die Erstellung von Modellen und die Erzeugung von Quellcode aus den Modellen. In einer Modellierumgebung MOD können vorzugsweise über eine graphische Benutzerschnittstelle Modelle eines dynamischen Systems erstellt werden. Hierbei kann es sich insbesondere um Blockdiagramme handeln, welche mehrere Blöcke umfassen und das zeitliche Verhalten und/oder interne Zustände eines dynamischen Systems beschreiben. Zumindest einige der Blöcke sind über Signale verbunden, also gerichtete Verbindungen zum Austausch von Daten, welche skalar oder zusammengesetzt sein können. Über eine Signalverbindung können Daten bzw. Signale übertragen werden; hierbei gibt ein erster Block einen Wert oder je nach Definition mehrere zusammengehörige Werte aus und ein zweiter Block empfängt diese und berücksichtigt sie bei der Ermittlung von einem oder mehreren zusammengehörigen Ausgabewerten des zweiten Blocks. Signale können skalare Variablen und/oder strukturierte Datentypen wie Arrays enthalten, wie dies beispielsweise bei einem Bus der Fall ist.

Blöcke können atomar sein, also aus Sicht der umgebenden Blöcke eine Einheit bilden, bei der zu Beginn eines Rechenschritts alle Eingangssignale anliegen müssen und zu Ende eines Rechenschritts alle Ausgangssignale vorhanden sind. Wenn Blockdiagramme hierarchisch sind, kann eine Vielzahl von Blöcken in einer untergeordneten Ebene den Aufbau eines Blocks in einer übergeordneten Ebene beschreiben. Hierachische bzw. zusammengesetzte Blöcke, auch wenn diese atomar sind, können eine Vielzahl von Blöcken in einer untergeordneten Ebene umfassen. Zusammengesetzte Blöcke können insbesondere Subsysteme sein; Subsysteme können zusätzliche Eigenschaften aufweisen, wie die Implementierung in einer getrennten Funktion und/oder ein Triggern der Ausführung des Subsystems über ein dediziertes Signal. In Subsystemen können spezielle Blöcke angeordnet sein, um die Eigenschaften des Subsystems weiter zu spezifizieren. Die Rechenumgebung TCE umfasst eine oder mehrere Bibliotheken BIB, aus der Blöcke bzw. Bausteine für den Aufbau eines Modells ausgewählt werden können. In einer Skriptumgebung MAT können Anweisungen interaktiv oder über eine Batchdatei eingegeben werden, um Berechnungen durchzuführen oder das Modell zu modifizieren. Die Rechenumgebung TCE umfasst weiterhin eine Simulationsumgebung SIM, die dazu eingerichtet ist, das Blockdiagramm zu interpretieren bzw. auszuführen, um das zeitliche Verhalten des Systems zu untersuchen. Diese Berechnungen erfolgen vorzugsweise mit Fließkommazahlen hoher Genauigkeit auf einem oder mehreren Kernen des Mikroprozessors CPU des Computersystems.

Aus einem erstellten Modell kann mit Hilfe eines Codegenerators PCG ein Quellcode bevorzugt in einer Programmiersprache wie C erzeugt werden. In einer Definitionsdatensammlung DDT werden zweckmäßigerweise zusätzliche Informationen zu dem Modell, insbesondere zu den Blockvariablen hinterlegt. Zweckmäßigerweise werden den Blockvariablen Wertebereiche und/oder Skalierungen zugeordnet, um eine Berechnung des Modells mit Festkomma-Instruktionen zu unterstützen. Auch gewünschte Eigenschaften des Quellcodes, beispielsweise Konformität zu einem Standard wie MISRA, können in der Definitionsdatensammlung DDT eingestellt bzw. hinterlegt werden. Zweckmäßigerweise wird jede Blockvariable einem vorgegebenen Variablentyp zugeordnet und es werden eine oder mehrere gewünschte Eigenschaften, wie beispielsweise die Zulässigkeit von Optimierungen wie einem Zusammenfassen von Variablen eingestellt. Der Codegenerator PCG wertet vorzugsweise die Einstellungen der Definitionsdatensammlung DDT aus und berücksichtigt diese bei der Erzeugung des Quellcodes. Die Definitionsdatensammlung DDT kann eine Baumstruktur aufweisen bzw. als eine einfache Datei in einem Speicher des Computersystems hinterlegt sein; alternativ kann es vorgesehen sein, die Definitionsdaten in einem dedizierten Datenbanksystem zu hinterlegen. Die Definitionsdatensammlung kann eine Programmschnittstelle und/oder Import-/Export-Funktionen aufweisen.

Das Computersystem PC weist einen Compiler COM und einen Linker LIN auf, die zweckmäßigerweise für die Erzeugung von auf einem Steuergerät ES und/oder dem Computersystem PC ausführbaren Binärdateien eingerichtet sind. Prinzipiell kann eine Vielzahl von Compilern vorhanden sein, insbesondere Cross-Compiler für unterschiedliche Zielplattformen, um Steuergeräte bzw. Evaluationsboards ES mit unterschiedlichen Prozessorarchitekturen zu unterstützen. Dadurch wird es möglich, den generierten Code auf dem Prozessor CPU des Computersystems zu testen (Software-in-the-Loop Test) oder auf dem Steuergerät zu testen (Processor-in-the-Loop Test).

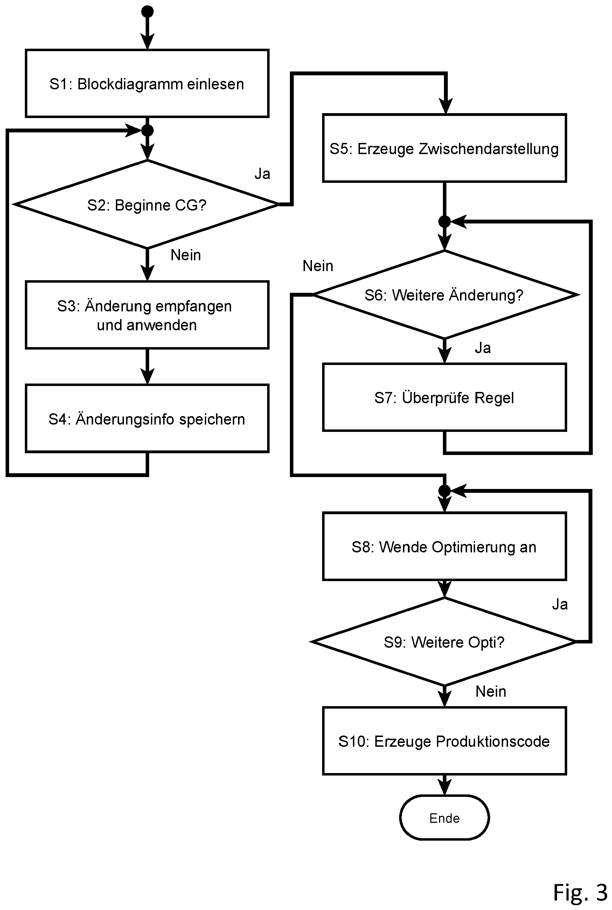

Figur 3 zeigt einen schematischen Ablaufplan einer Ausführungsform des erfindungsgemäßen Verfahrens zum Erzeugen von Quellcode. Das Verfahren kann vollständig von einem Prozessor einer beispielhaften Ausführung des Computersystems PC ausgeführt werden; es kann aber auch zur Ausführung in einer Client-Server-Umgebung mit einem Bedienrechner und einem oder mehreren über ein Netzwerk verbundenen Servern vorgesehen sein, wobei insbesondere rechenintensive Schritte zweckmäßigerweise auf den Servern durchgeführt werden.

In Schritt S1 (Blockdiagramm einlesen) wird ein Blockdiagramm eingelesen. Das Blockdiagramm umfasst vorzugsweise einen hierarchischen Block und kann eine Vielzahl weiterer hierarchischer Blöcke enthalten. Zweckmäßigerweise umfasst das Einlesen des Blockdiagramms auch ein Auslesen mindestens einer Codegenerierungseinstellung, wie beispielsweise der Datentyp einer Variablen, insbesondere aus der Definitionsdatensammlung DDT.

In Schritt S2 (Beginne CG?) wird ermittelt, ob eine Codegenerierung erfolgen soll. Eine Codegenerierung kann beispielsweise in einer grafischen Benutzeroberfläche durch Anklicken einer Schaltfläche gestartet werden. Es kann auch vorgesehen, dass eine Codegenerierung durch das Aufrufen einer Funktion in einer Skriptumgebung angefordert wird. Der Codegenerator kann verschiedene Codegenerierungsmodalitäten wie eine Standard-Codegenerierung, eine Classic-AUTOSAR-Codegenerierung und/oder eine Adaptive-AUTOSAR-Codegenerierung unterstützen. Je nach Modus wird dann zweckmäßigerweise Quellcode mit unterschiedlichen Eigenschaften erzeugt, um insbesondere die Konventionen verschiedener Softwareumgebungen wie einer AUTOSAR-Laufzeitumgebung einzuhalten. Auch die Generierung von Code in einer Hardwarebeschreibungssprache oder einer Konfiguration eines programmierbaren Hardwarebausteins kann als eine alternative Codegenerierungsmodalität vorgesehen sein. Wenn eine Codegenerierung erfolgen soll, wird als nächstes Schritt S5 (Erzeuge Zwischendarstellung) ausgeführt.

Solange keine Codegenerierung gestartet wurde, kann das Blockdiagramm in der Modellierumgebung angepasst werden. In Schritt S3 (Änderungen empfangen und anwenden) kann der Nutzer verschiedene Änderungen an dem Blockdiagramm vornehmen, beispielsweise über eine grafische Benutzeroberfläche der Modellierumgebung. Sobald die Änderung empfangen und angewendet wurde, werden in Schritt S4 (Änderungsinfo speichern) Informationen zu der Änderung in einer Datenbank hinterlegt. Wenn die Änderung beispielsweise ein Kopieren des Modellelements ist, werden zweckmäßigerweise das geänderte Modellelement mit sämtlichen Codegenerierungseinstellungen und das ursprüngliche Modellelement mit sämtlichen Codegenerierungseinstellungen des ursprünglichen Modellelements in der Datenbank hinterlegt. Nach jeder Änderung wird in Schritt S2 überprüft, ob ein Befehl zur Codegenerierung empfangen wurde und Schritt S5 ausgeführt werden soll.

In Schritt S5 (Erzeuge Zwischendarstellung) wird das gewählte Modell aus einem oder mehreren Blöcken des Blockdiagramms BLD in eine Zwischendarstellung IR transformiert, die vorzugsweise einen oder mehrere hierarchische Graphen umfasst. Hierbei kann es sich insbesondere um einen Datenflussgraph, einen Kontrollflussgraph oder eine Baumstruktur handeln.

Neben dem Blockdiagramm BLD werden zweckmäßigerweise auch Zusatzinformationen aus einer Definitionsdatensammlung DDT bei der Erzeugung der Zwischendarstellung berücksichtigt bzw. fließen in diese ein. Dies kann auch Situationen umfassen, in denen Elemente basierend auf Informationen in der Definitionsdatensammlung DDT erzeugt werden.

In Schritt S6 (Weitere Änderung?) wird überprüft, ob der Nutzer Änderungen an dem Blockdiagramm vorgenommen hat. Ist dies der Fall (Ja), so wird in Schritt S7 (Überprüfe Regel) mindestens eine Plausibilitätsregel für die Änderung überprüft. Beispielsweise kann für einen eingefügten Block überprüft werden, ob der Wertebereich einer Blockausgangsvariablen verträglich mit dem aus den Eingangsvariablen resultierenden Wertebereich ist. Wenn ein eingefügter Block Teil eines übergeordneten hierarchischen Blocks ist, werden zweckmäßigerweise auch für Codegenerierungseinstellungen des hierarchischen Blocks Plausibilitätsregeln überprüft. Wenn der eingefügte Block beispielsweise auf eine externe Speichervariable zugreift, ist eine Kennzeichnung des übergeordneten hierarchischen Blocks als Seiteneffektfrei potentiell problematisch. Prinzipiell kann es auch vorgesehen sein, dass die Überprüfung von Plausibilitätsregeln ganz oder teilweise vor der Erzeugung einer Zwischendarstellung erfolgt. Die hier dargestellte Reihenfolge hat den Vorteil, dass während der Erzeugung der Zwischendarstellung einige Codegenerierungseinstellungen zwischen durch Signalen verbundenen Blöcken propagiert werden können.

In Schritt S8 (Wende Optimierung an) werden die hierarchischen Graphen optimiert, um die Anzahl benötigter Variablen und/oder einen Speicherverbrauch, wie beispielsweise eine Stackbelegung, und/oder die Anzahl von Operationen bzw. Prozessorinstruktionen und/oder die Ausführungszeit des Quellcodes zu verringern. Diese Optimierung kann eine Vielzahl von Zwischenschritten umfassen, in denen weitere Zwischendarstellungen zwischen Modell/Blockdiagramm und Quellcode/Programmtext erzeugt werden. Insbesondere kann es vorgesehen sein, in jedem Zwischenschritt eine Menge von ursprünglichen hierarchischen Graphen in eine andere Menge von geänderten hierarchischen Graphen zu konvertieren, wobei eine oder mehrere Optimierungsregeln angewandt werden. Die anzuwendenden Optimierungsregeln können in der Definitionsdatensammlung hinterlegt sein und/oder einem voreingestellten Standardablauf folgen.

In Schritt S9 (Weitere Opti?) wird überprüft, ob eine weitere Optimierungsregel anzuwenden ist. Bei der Optimierung können verschiedene Strategien bzw. Optimierungsregeln wie "Constant folding" oder eine Eliminierung von "Dead Code" angewandt werden. Wenn mindestens eine Optimierungsregel noch nicht angewendet wurde oder ein weiteres Mal angewendet werden soll, so wird Schritt S8 wiederholt. Andernfalls wird die Durchführung in Schritt S10 fortgesetzt. Es kann auch vorgesehen sein, einzelne Optimierungen bereits im Rahmen der Transformation in eine Zwischendarstellung von Schritt S5 anzuwenden, insbesondere wenn diese auf einer Blockdiagrammdarstellung einfacher durchgeführt werden können.

In Schritt S10 (Erzeuge Produktionscode) werden die optimierte Zwischendarstellung IR bzw. die optimierten hierarchischen Graphen, welche aus den gesamten durchgeführten Zwischenschritten resultieren, in Quellcode PCO einer textuellen Programmiersprache, wie insbesondere C-Code, übersetzt. Auch in diesem Schritt kann eine weitere Optimierung erfolgen, insbesondere dergestalt, dass die erzeugten Anweisungen einer Untermenge der prinzipiell von der Sprache umfassten Anweisungen darstellen und/oder die erzeugten Kontrollstrukturen eine Untermenge der prinzipiell von der Sprache umfassten Kontrollstrukturen darstellen. Dies ermöglicht es, genau definierte Regeln zu erfüllen. Alternativ oder ergänzend kann es vorgesehen sein, Zusatzinformationen, wie z.B. einen Bezug zwischen Programmzeile und Block des Blockdiagramms, zu erzeugen und insbesondere in Form von Kommentaren in den Quellcode einzubinden, um die Lesbarkeit des Quellcodes PCO zu verbessern und/oder ein Debugging zu vereinfachen.

Während oder nach der Codegenerierung können Informationen über das aktuelle Blockdiagramm oder Ergebnisse der Codegenerierung, wie beispielsweise Warnungen, in der Definitionsdatensammlung gespeichert werden. Diese Informationen können beispielsweise dazu genutzt werden, eine Kompilierung des erzeugten Quellcodes zu beeinflussen oder Metainformationen für andere Werkzeuge bereitzustellen, wie beispielsweise Kalibrierungsinformationen im ASAP2-Format oder Informationen zur Erzeugung einer Zwischenschicht für eine Laufzeitumgebung nach dem AUTOSAR-Standard.

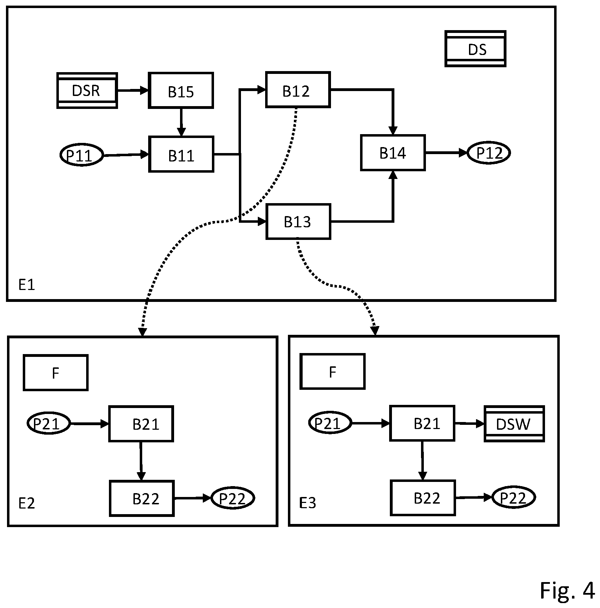

Fig. 4 zeigt ein Beispiel eines hierarchischen Blockdiagramms. Die oberste Ebene E1 umfasst Eingangs-Port P11, Ausgangs-Port P12, über welche Signale bzw. Daten empfangen und ausgegeben werden, und die Blöcke B11, B12, B13, B14, B15, welche Operationen auf Eingangssignale anwenden, um Ausgangssignale zu erzeugen. Hierbei sind die zwei Blöcke B12 und B13 als hierarchische Blöcke in untergeordneten hierarchischen Ebenen E2 und E3 implementiert. Weiterhin umfasst die oberste Ebene E1 des Blockdiagramms einen Datenspeicher-Block DS (dieser kann auch als DataStoreMemory Block bezeichnet werden), in dem Daten hinterlegt werden können, sowie einen Datenspeicher-Lese-Block DSR zum Lesen aus dem Datenspeicher DS, welcher mit Block B15 verbunden ist.

Der hierarchische Block B12 umfasst die in der Ebene E2 dargestellten Blöcke Eingangs-Port P21, Ausgangs-Port P22, die Blöcke B21 und B22 sowie einen Funktionsblock F. Der hierarchische Block B13 umfasst die in der Ebene E3 dargestellten Blöcke, und zwar neben den in B12 enthaltenen Blöcken einen zusätzlichen Datenspeicher-Schreibe-Block DSW zum Schreiben in den Datenspeicher DS. Der Datenspeicher DS stellt somit einen globalen Speicher bzw. eine globale Variable dar, über welche der hierarchische Block B13 Daten mit der Umgebung austauschen kann, ohne dass dies über eine Signalverbindung sichtbar wird.

Der Funktionsblock F von Block B12 kann mit verschiedenen Codegenerierungseinstellungen bzw. Eigenschaften der Funktion parametriert sein. Insbesondere kann angegeben sein, dass die Funktion verschoben werden darf (Movable) und/oder dass die Funktion frei von Seiteneffekten ist (Side_Effect_Free). Wurde Block B13 jetzt durch Kopieren und Einfügen von Block B12 erstellt, wobei anschließend der Datenspeicher-Schreibe-Block eingefügt wurde, können die Codegenerierungseinstellungen irrtümlich übernommen worden sein. Indem der Nutzer auf die potentiell kritischen Einstellungen im Funktionsblock hingewiesen wird, können durch Kopieren und Ändern hervorgerufene Spezifikationsfehler vermieden werden.

Das erfindungsgemäße Verfahren ermöglicht es, gegenüber einem definierten Modellierungsstand vorgenommene Änderungen, wie insbesondere ein Copy&Paste eines Blocks, inklusive Art der Änderung nachzuhalten. Hierbei können direkte Änderungen an einzelnen Modellelementen aber auch Änderungen an untergeordneten Hierarchieebenen berücksichtigt und Codegenerierungseinstellungen auf Plausibilität überprüft werden. Auf dieser Basis kann der Nutzer gezielt potentielle Problemquellen überprüfen und einen diesbezüglich gutgezeichneten Modellierungsstand definieren.

## Patentansprüche

1. Computerimplementiertes Verfahren zum Erzeugen von Quellcode aus einem oder mehreren Blöcken eines Blockdiagramms, wobei das Erzeugen von Quellcode ein Auswerten mindestens einer Codegenerierungseinstellung, ein Transformieren des Blockdiagramms in eine Zwischendarstellung, ein sukzessives Optimieren der Zwischendarstellung unter Berücksichtigung der mindestens einen Codegenerierungseinstellung und ein Übersetzen der optimierten Zwischendarstellung in Quellcode umfasst, das Verfahren umfassend
Öffnen des Blockdiagramms in einem Modelleditor,
Empfangen einer Änderung an einem Modellelement, wobei das Modellelement mit mindestens einer Codegenerierungseinstellung parametriert ist,
Speichern der Änderung in einer Datenbank,
Erzeugen von Quellcode,
Überprüfen, ob das geänderte Modellelement eine Plausibilitätsregel erfüllt, und
Wenn die Plausibilitätsregel nicht erfüllt ist, Ausgeben einer Warnung und/oder Markieren des Quellcodes als ungültig.

2. Verfahren nach Anspruch 1, **dadurch gekennzeichnet, dass** zu einer Änderung ein Gutzeichnen in der Datenbank hinterlegt werden kann, und dass die Plausibilitätsregel erfüllt ist, wenn die Änderung gutgezeichnet wurde, so dass für gutgezeichnete Änderungen keine Warnung und/oder kein Markieren des Quellcodes als ungültig erfolgt.

3. Verfahren nach Anspruch 2, **gekennzeichnet durch** das Anzeigen einer Bedienoberfläche, um ein Gutzeichnen einer Änderung zu empfangen, wobei vorzugsweise ein Ausschnitt des erzeugten Quellcodes dargestellt wird, der insbesondere aus dem geänderten Modellelement erzeugten Quellcode umfasst.

4. Verfahren nach einem der vorhergehenden Ansprüche, **dadurch gekennzeichnet, dass** die Änderung ein Kopieren eines Modellelements und/oder aller Codegenerierungseinstellungen eines Modellelements umfasst.

5. Verfahren nach Anspruch 4, **dadurch gekennzeichnet, dass** die Plausibilitätsregel erfüllt ist, wenn für ein Modellelement, das mindestens eine Variable aufweist, der Wertebereich der mindestens einen Variable größer oder gleich dem Wertebereich einer Eingangsvariable nach Anwendung der im geänderten Modellelement vorgenommenen Berechnung ist und/oder mindestens eine Codegenerierungseinstellung im geänderten Modellelement einen abweichenden Wert gegenüber dem ursprünglichen Modellelement hat.

6. Verfahren nach einem der vorhergehenden Ansprüche, **dadurch gekennzeichnet, dass** das Modellelement ein hierarchischer Block ist, dessen Funktionalität durch ein oder mehrere untergeordnete Blöcke implementiert ist.

7. Verfahren nach Anspruch 6, **dadurch gekennzeichnet, dass** die Änderung ein Hinzufügen eines untergeordneten Blocks ist, wobei die Plausibilitätsregel nicht erfüllt ist, wenn der hinzugefügte Block eine Zustandsvariable und/oder eine Datenverbindung zu einem Modellelement außerhalb des hierarchischen Blocks umfasst.

8. Verfahren nach Anspruch 6 oder 7, **dadurch gekennzeichnet, dass** wenn der hierarchische Block eine Codegenerierungseinstellung aufweist, welche eine Verschiebbarkeit und/oder eine Freiheit von Seiteneffekten angibt, die Plausibilitätsregel nicht erfüllt ist, wenn ein untergeordneter Block des hierarchischen Blocks eine Variable umfasst, für welche die Codegenerierungseinstellungen zu einem möglichen Zusammenfassen von Variablen und/oder eine Speicheradresse einer Variablen geändert wurden.

9. Verfahren nach einem der vorhergehenden Ansprüche, **dadurch gekennzeichnet, dass** mit einem Änderungsbefehl des Modelleditors eine Funktion in einer Skriptumgebung verknüpft wird, welche zumindest das geänderte Modellelement, eine ursprüngliche Codegenerierungseinstellung und eine geänderte Codegenerierungseinstellung in der Datenbank hinterlegt.

10. Verfahren nach Anspruch 9, **dadurch gekennzeichnet, dass** sofern der Änderungsbefehl ein Kopieren des Modellelements ist, das geänderte Modellelement mit sämtlichen Codegenerierungseinstellungen, das ursprüngliche Modellelement und sämtliche Codegenerierungseinstellungen des ursprünglichen Modellelements in der Datenbank hinterlegt werden.

11. Verfahren nach einem der vorhergehenden Ansprüche, **dadurch gekennzeichnet, dass** das Überprüfen, ob das geänderte Modellelement mindestens eine Plausibilitätsregel erfüllt, durch ein Empfangen eines Befehls zum Erzeugen von Quellcode ausgelöst wird, wobei der Befehl über eine grafische Benutzeroberfläche und/oder eine Anwendungsschnittstelle empfangen werden kann.

12. Verfahren nach einem der vorhergehenden Ansprüche, **dadurch gekennzeichnet, dass** das Blockdiagramm eine Vielzahl von Modellelementen umfasst, und dass für jedes geänderte Modellelement und/oder jede gespeicherte Änderung mindestens eine Plausibilitätsregel überprüft wird.

13. Verfahren zum Konfigurieren eines Steuergeräts, wobei das Steuergerät mindestens eine Recheneinheit umfasst und vorzugsweise mindestens einen Sensor und/oder mindestens einen Aktor aufweist, um Daten eines physikalischen Prozesses zu erfassen und/oder auf diesen einzuwirken, das Verfahren umfassend die Schritte
a. Einlesen eines Blockdiagramms,
b. Erzeugen eines Quellcodes mit einem Verfahren nach einem der vorhergehenden Ansprüche,
c. Kompilieren des Quellcodes für die Recheneinheit, so dass ein ausführbarer Code erzeugt wird,
d. Übertragen des ausführbaren Codes auf das Steuergerät, und
e. Hinterlegen des ausführbaren Codes auf einem nichtflüchtigen Speicher des Steuergeräts und/oder Ausführen des ausführbaren Codes durch die Recheneinheit des Steuergeräts.

14. Computerprogrammprodukt mit einem computerlesbaren Speichermedium, auf dem Befehle eingebettet sind, die, wenn sie von einem Prozessor ausgeführt werden, bewirken, dass der Prozessor dazu eingerichtet ist, ein Verfahren gemäß einem der vorhergehenden Ansprüche auszuführen.

15. Computersystem umfassend eine Mensch-Maschine-Schnittstelle, einen nichtflüchtigen Speicher und einen Prozessor, wobei der Prozessor dazu eingerichtet ist, ein Verfahren nach einem der vorhergehenden Ansprüche auszuführen.
